# EUROPEAN PATENT SPECIFICATION

(11) **EP 4 243 033 B1**
(45) Date of publication and mention of the grant of the patent: **18.02.2026**
(21) Application number: 20935478.6
(22) Date of filing: 09.12.2020
(51) Int. Cl.: G21F 5/012, G21F 5/06, G09B 9/00

(54) **SIMULATED SPENT FUEL STORAGE TANK FOR NUCLEAR POWER STATION**
SIMULIERTER TANK ZUR LAGERUNG VON VERBRAUCHTEM BRENNSTOFF FÜR EIN KERNKRAFTWERK
RÉSERVOIR DE STOCKAGE DE COMBUSTIBLE ÉPUISÉ SIMULÉ POUR CENTRALE NUCLÉAIRE

(30) Priority: 14.10.2020 CN 202011096864
(43) Date of publication of application: 13.09.2023
(73) Proprietor: China Nuclear Power Engineering Co., Ltd., Shenzhen, Guangdong 518124 (CN); Guangdong Nuclear Power Joint Venture Co., Ltd., Shenzhen, Guangdong 518026 (CN); China General Nuclear Power Corporation, Shenzhen, Guangdong 518026 (CN); CGN Power Co., Ltd., Shenzhen, Guangdong 518026 (CN)
(72) Inventor: CHENG, Cheng, Shenzhen, Guangdong 518124 (CN); PAN, Yuelong, Shenzhen, Guangdong 518124 (CN); TANG, Shaohua, Shenzhen, Guangdong 518124 (CN); ZHANG, Xueling, Shenzhen, Guangdong 518124 (CN); TANG, Qionghui, Shenzhen, Guangdong 518124 (CN)
(74) Representative: Greaves Brewster LLP
(86) International application number: PCT/CN2020/134729
(87) International publication number: WO 2021/227470

(56) References cited:
- CN-A- 105 261 402
- CN-A- 106 229 018
- CN-A- 106 229 018
- CN-A- 109 060 319
- CN-A- 109 060 319
- CN-U- 208 317 038
- CN-U- 209 674 898
- CN-U- 210 403 223
- JP-A- 2019 163 973

## Description

### FIELD OF THE INVENTION

The present invention generally relates to nuclear power plants and, more particularly, relates to a simulated spent fuel storage tank for a nuclear power station.

### BACKGROUND OF THE INVENTION

In view of the insufficient wet storage capacity of spent fuel pool in nuclear power plant, due to the inherent safety and modular storage economy arising from passive natural ventilation, spent fuel dry storage technology has been widely used in the world. A typical technical feature of spent fuel dry storage is that the spent fuel assembly is enclosed in sealed helium filled spent fuel storage tank and the spent fuel storage tank is stored in a concrete module via a transfer container, and the passive natural ventilation cooling is carried out by using natural ventilation.

In order to ensure the thermal safety, the prior art has carried out the normal and accident numerical simulation analysis to ensure that the safety limit requirements are met. In terms of safety function, thermal numerical simulation has the advantages of convenient modeling, fast calculation, good visualization effect and low cost. However, due to the restriction of the complexity of equipment components and environmental conditions, it is necessary to simplify the calculation of boundary and material properties, and there is a deviation from the actual situation. In addition, due to the influence of structural discretization and the limitation of empirical formulas, there is a lack of physical thermal performance tests to verify the reliability of the calculated results.

In terms of operational functions, the prior art needs to complete the welding of the spent fuel storage tanks, vacuum drying, module storage and the cutting and retrieval operations of spent fuel assemblies. On one hand, it is necessary to identify the process operation to prove the rationality of the equipment design and the manufacturing reliability. On the other hand, the lack of spent fuel storage tanks for skills training has led to insufficient operational skills of operators. For example, in the case of storage operation, when the spent fuel storage tank is lifted vertically or pushed into the module horizontally, once the deviation of the horizontal and vertical face-to-face will occur, the storage tank will jam and collide easily, which will bring about the safety risk.

In view of the foregoing, what is needed, therefore, is to provide a simulated spent fuel storage tank for nuclear power station, so as to meet the practical requirements of thermal performance and process operation qualification of the spent fuel storage tank and skills training of the operator.

CN109060319A relates to a test device and method for sensitivity of spent fuel pool nozzle of nuclear power plant.

CN106229018A relates to a heating device.

### SUMMARY OF THE INVENTION

The present invention relates to a simulated spent fuel storage tank for nuclear power station as defined in claim 1. Preferred features of the invention are set out in the dependent claims.

One object of the present invention is to overcome the disadvantages of the prior art and provides a simulated spent fuel storage tank for nuclear power plant, which can meet the practical requirements of thermal performance and process operation qualification of spent fuel storage tank and skills training of operator.

According to the present invention, a simulated spent fuel storage tank for nuclear power station includes a simulated storage tank, simulated spent fuel assemblies received in the simulated storage tank, and an electric heater, wherein the simulated spent fuel assemblies are electrically connected to the electric heater (3) by cables.

According to the present invention, the simulated storage tank includes a bottom plate, a cylinder body arranged on the bottom plate, a simulated spent fuel grid in the cylinder body, and an inner top cover and an outer top cover independent from each other seated on a top of the cylinder body, wherein the inner top cover is provided with two bolting grooves, and a siphon block and a inflatable block at two sides of the cylinder body are inserted in the two bolting grooves respectively.

According to one embodiment of the present invention, the bolting groove is provided with a layer of independent cover plate, and the cover plate is welded to the inner top cover.

According to one embodiment of the present invention, an inner top cover support for supporting the inner top cover is provided on a top of the inner sidewall of the cylinder body, and a support screw is arranged on a top of the inner top cover support, and the support screw penetrates a bolting groove defined in the inner top cover to fix the inner top cover via a bolt.

According to one embodiment of the present invention, the inner top cover is provided with a bolting groove, a clamp groove located above the bolting groove, and a bolting groove cover plate, the bolting groove is provided with a through hole, and the support screw on the top of the inner top cover support passes through the through hole and couples the inner top cover to the cylinder body via bolt thread connection, with the clamp groove sleeving on the inner top cover support for fixing the inner top cover support.

According to one embodiment of the present invention, the outer top cover is formed with a first body, a first cable hole extending through the first body and a first cable penetrator disposed in the first cable hole, wherein the first cable penetrator seals the first cable hole via welding or via thread connection.

According to one embodiment of the present invention, the first cable penetrator is a two-step cylinder with a cable penetrating passage in a middle thereof, for connecting a cable running through the inner top cover to the electric heater through the outer top cover.

According to one embodiment of the present invention, the inner top cover includes a second body, a siphon block through hole and an inflatable block through hole defined in the second body, and a second cable hole and a second cable penetrator corresponding to the first cable hole and the first cable penetrator, and the second cable hole is provided with a cover plate.

According to one embodiment of the present invention, the siphon block includes a siphon connection block, a drain pipe, and a quick connector for connecting the siphon connection block and the drain pipe.

According to one embodiment of the present invention, the simulated spent fuel grid includes a plurality of storage chambers, with each storage chamber containing a set of simulated spent fuel assemblies, the simulated spent fuel assembly includes an upper tube seat, a lower tube seat, and a square tube between the upper tube seat and the lower tube seat, the square tube is provided with a cross bracket to divide the square tube into four storage units, and each storage unit stores an electric heating rod.

According to one embodiment of the present invention, the electric heating rod includes a housing, a heating wire fixing rod seated in the housing, and an electric heating wire set around the heating wire fixing rod, wherein a filling insulation material is arranged between the housing and the electric heating wire, and the cable connecting the electric heating wire is formed with a protective sleeve.

According to one embodiment of the present invention, the upper tube seat is provided with a base seat, a cable wire hole corresponding to the cable, and a protective platform arranged on an outer edge of the base seat.

According to one embodiment of the present invention, the lower tube seat includes a base seat, a support leg for supporting the base seat, and a holding slot for sleeving and fixing the cross bracket.

Compared with the prior art, the simulated spent fuel storage tank for the nuclear power plant of the invention can be used for thermal identification and operation training tests, and is based on the actual loading, storage quantity and heat release of the spent fuel assembly, it can accurately simulate the layout state and thermal power of the spent fuel assembly, and realize the thermal performance appraisal of the spent fuel storage tank, the problem that the existing spent fuel storage system cannot be verified by numerical simulation is solved. The simulated spent fuel storage tank for the nuclear power plant can also simulate vacuum drying, automatic welding and cutting and retrieving operations under the real heating environment, and can also simulate the load of the real spent fuel assembly to carry out the transfer and storage operations of the storage tank, the utility model can improve the skill level of the operator and avoid the occurrence of human-related events.

### BRIEF DESCRIPTION OF THE DRAWINGS

In order to explain the technical solution of the embodiments of the present invention clearly, a brief introduction to the drawings required in the embodiments will be described as following. It should be understood that the drawings show only some embodiments of the present invention and, therefore, should not be seen as a limitation to the scope of the present invention, which is defined by the claims. To one ordinary skilled in the art, other relevant drawings can also be obtained without creative work on the basis of the drawings.
Fig. 1 is a partially cross-sectional view of a simulated spent fuel storage tank for a nuclear power station according to one embodiment of the present invention;
Fig. 2 is the top view of the simulated spent fuel storage tank for a nuclear power station of the present invention, in which the electric heater has been removed;
Fig. 3 is a partially cross-sectional view of an outer top cover of the simulated spent fuel storage tank for a nuclear power station of the present invention;
Fig. 4 is a partially cross-sectional view of an inner top cover of the simulated spent fuel storage tank for a nuclear power station of the present invention;
Fig. 5 is another partially cross-sectional view of an inner top cover of the simulated spent fuel storage tank for a nuclear power station of the present invention;
Fig. 6 is a partially assembled view of the inner top cover and the cylinder support in the simulated spent fuel storage tank for a nuclear power station of the present invention;
Fig. 7 is a partially cross-sectional view of a cylinder body of the simulated spent fuel storage tank for a nuclear power station of the present invention;
Fig. 8 is a perspective view of a simulated spent fuel grid in the simulated spent fuel storage tank for a nuclear power station of the present invention;
Fig. 9 is a perspective view of a simulated spent fuel assembly in the simulated spent fuel storage tank for a nuclear power station of the present invention, showing an external structure of the simulated spent fuel assembly;
Fig. 10 is a perspective view of the simulated spent fuel assembly in the simulated spent fuel storage tank for a nuclear power station of the present invention, showing the internal structure of the simulated spent fuel assembly;
Fig. **11** is a cross-sectional view of the simulated spent fuel assembly in the simulated spent fuel storage tank for a nuclear power station of the present invention;
Fig. 12 is a cross-sectional view of an electric heating rod in the simulated spent fuel storage tank for a nuclear power station of the present invention;
Figs. 13A and 13B are perspective views of upper and lower tube seats of the simulated spent fuel assembly in the simulated spent fuel storage tank for a nuclear power station of the present invention; and
Figs. 14A and 14B are perspective views of a simulated storage tank and an assembly test block of the simulated spent fuel storage tank for a nuclear power station of the present invention for use in load test.

### DETAILED DESCRIPTION OF THE INVENTION

The technical solution of the embodiments of the present invention will be described clearly and completely in combination with the drawings. Obviously, the embodiments described are only a part of the embodiments of the present invention, not all embodiments. Therefore, the following detailed description of embodiments of the present invention provided in the attached drawings is not intended to limit the scope of the present invention, but merely represents selected embodiments of the present invention. Based on the embodiments of the present invention, other embodiments obtained by one ordinary skilled in the art without creative work also fall within the scope of the present invention.

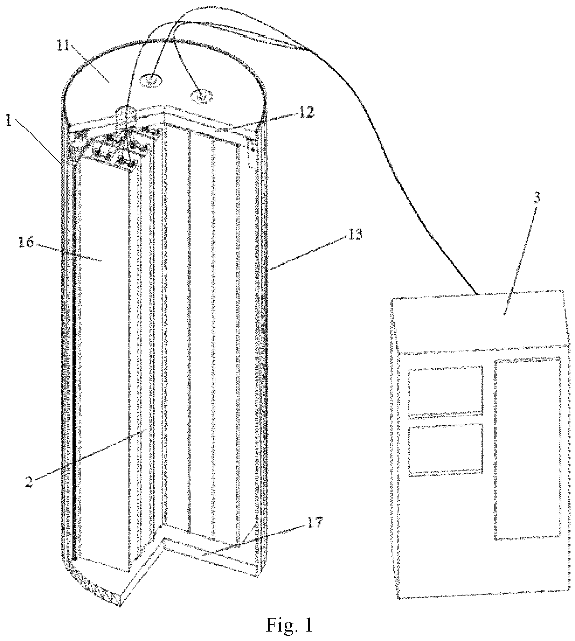

Referring to Fig. 1, one embodiment of the present invention provides a simulated spent fuel storage tank for a nuclear power plant including a simulated storage tank 1, a simulated spent fuel assembly 2 contained in the simulated storage tank 1, and an electric heater 3, wherein the simulated spent fuel assembly 2 is electrically connected with the electric heater 3 via a cable to realize the electric heating function of the simulated spent fuel assembly 2.

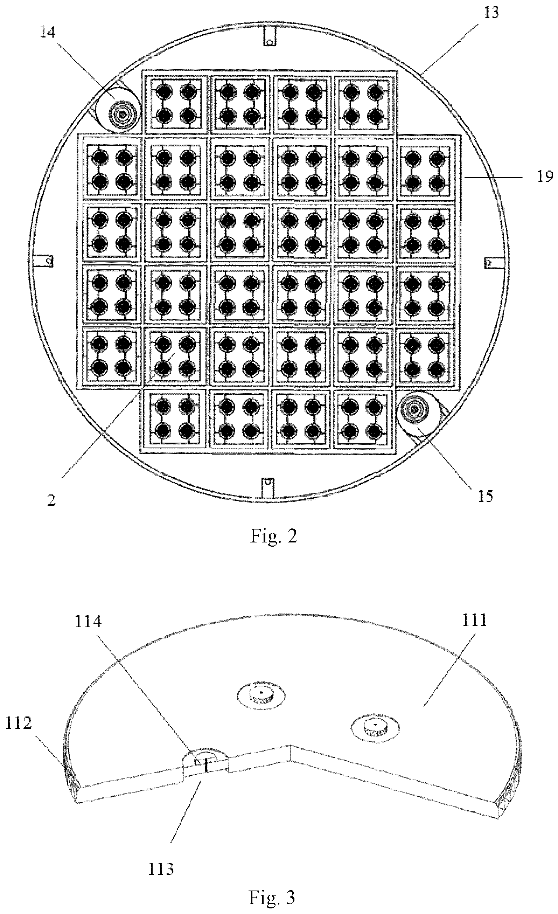

Referring to Figs. 1 and 2, the simulated storage tank 1 includes a bottom plate 17, a cylinder body 13 on the bottom plate 17, a simulated spent fuel grid 16 within the cylinder body 13, and an inner top cover 12 and an outer top cover 11 located at the top of the cylinder body 13 and independent from each other, wherein two penetration holes are arranged on the inner top cover 12, the siphon block 14 and the inflatable block 15 located on both sides of the cylinder body 13 are nested in two penetration holes respectively (as shown in Fig. 2) . The outer top cover 11 and the inner top cover 12 are mutually independent circular cover plates for simulating automatic welding and cutting process operation. The siphon block 14 and the inflatable block 15 are independent from each other and are positioned on both sides of the cylinder body 13 respectively and are fixedly connected by welding. An independent small cover plate is arranged on the penetration hole of the inner top cover 12, and each small cover plate is connected with the inner top cover 12 by welding.

The siphon block 14 and the inflatable block 15 are provided with quick connectors inside for simulating the operation of filling and draining the spent fuel storage tank with gas, pumping and vacuum drying and filling with helium gas. The bottom plate 17 is provided with a water collecting tank. The drain pipe and the siphon block 14 are fixed by screw thread to drain the boron-containing water in the tank through a siphon effect. The simulated spent fuel grid 16 is located inside the cylinder body13, the simulated spent fuel grid 16 and the bottom plate 17 can be fixedly connected by welding or fastening, and the simulated spent fuel grid 6 and the cylinder body 13 can be fixed by filling or supporting.

Referring to Fig. 3, the outer top cover 11 is provided with a first body 111, a first cable hole 113 extending through the first body 111, and a first cable penetrator 114 disposed in the first cable hole 113. The first penetrator 114 seals the first cable hole 113 through a welding or threaded connection. The weld groove 112 can adopt V-type groove with different structure forms to simulate the automatic welding operation of the storage tank cover plate and the cutting and retrieving operation of the cover plate. The first cable hole 113 may be provided with one or more, and in the embodiment shown in Fig. 3, four first cable holes 113 are provided. The first cable penetrator 114 is a two-step cylinder defining a cable penetrates passage in a middle thereof, which is used for connecting the cable which penetrates from the inner top cover 12 to the electric heater 3 through the outer top cover 11.

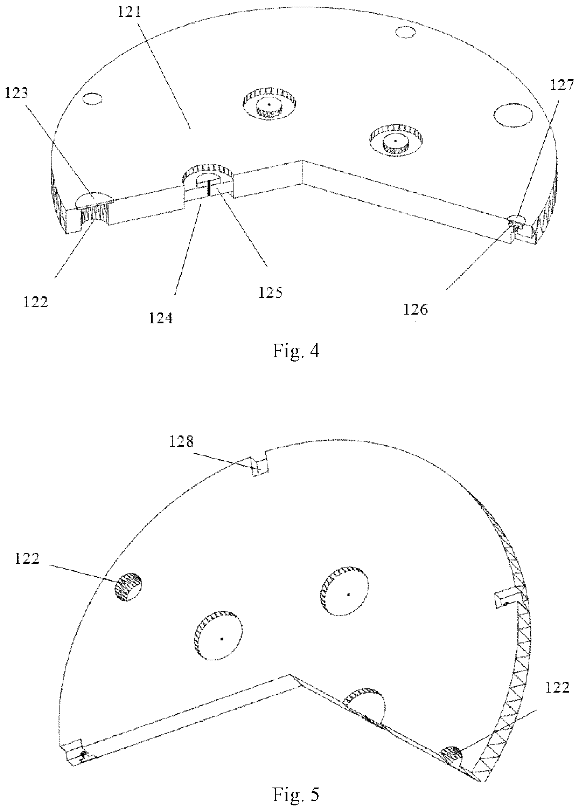

Referring to Figs. 4 and 5, the inner top cover 12 includes a second body 121, a siphon block perforating hole and an inflatable block perforating hole 122 provided on the second body 121, and a second cable hole 124 and a second cable penetrator 125 arranged corresponding to the first cable hole 113 and the first cable penetrator 114, and the second cable hole 124 is provided with a cover plate 123. The siphon block and the inflatable block have two perforating holes 122, which are equidistant distributed at both ends through the center of the cover plate 123, and are used for sleeving the siphon block 14 and the inflatable block 15 respectively.

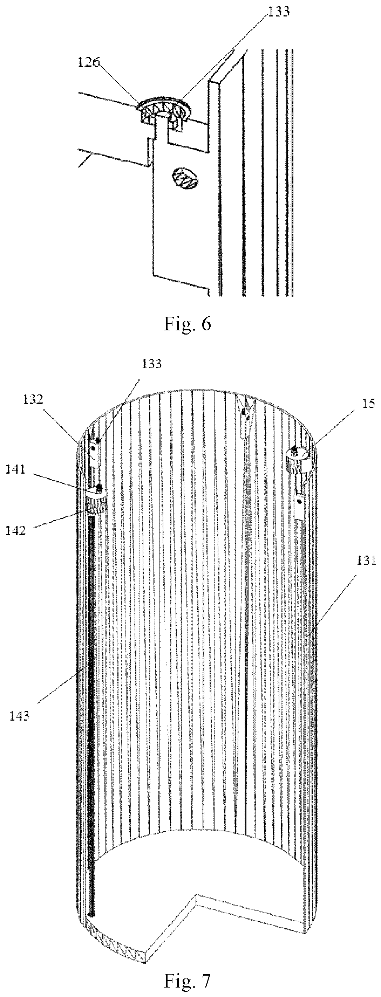

Referring to Figs. 6 and 7, the inner side wall 131 of the cylinder body 13 is provided with an inner top cover support 132 for supporting the inner top cover 12, and the top of the inner top cover support 132 is provided with a support screw 133, the support screw 133 penetrates the bolting groove 126 arranged on the inner top cover 12, to fix the inner top cover 12 via bolt connection.

Referring to Figs. 4 and 7, the inner top cover 12 is provided with a bolting groove 126, a clamp groove 128 above the bolting groove 126, and a bolting groove cover plate 127. The bolting groove 126 is provided with a perforated hole, and the top of the inner top cover support 132 is provided with a supporting screw 133, which passes through the perforated hole and fixes the inner top cover 12 to the cylinder 13 through a bolt thread connection. In installation of the inner top cover 12, the clamp groove 128 is sleeved on the inner top cover support 132, to support and fix the inner top cover 12.

Referring to Fig. 4, there are four bolting grooves 126, uniformly distributed in concentric, each bolting groove 126 defines a perforated hole, for use in the full-load and no-load tests of the spent fuel assemblies shown in Figs. 3 and 4. The support screw of the inner top cover is passed through the perforated hole, and a bolt is mounted on the upper part of the inner top cover 12, to fix the inner top cover 12 in the cylinder body 13, to ensure that the simulated spent fuel assembly 2 does not slip out in horizontal operation and protect the simulated spent fuel grid 16.

Referring to Fig. 7, the siphon block 14 includes a siphon connection block 141, a drain pipe 143, and a quick connector 142 connecting the siphon connection block 141 and the drain pipe 143. The difference between the inflatable block 15 and the siphon block 14 lies only in the absence of a drain pipe 143. In this manner, the device can be used for simulating the operation of inflatable drainage, vacuum drying and helium filling.

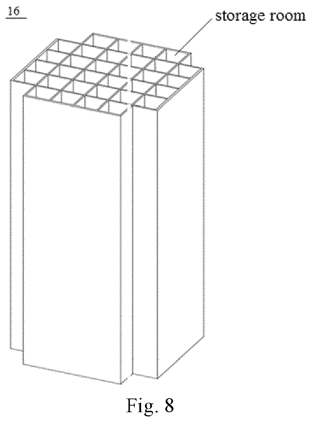

Referring to Fig. 8, the simulated spent fuel grid 16 includes several storage chambers, each storage chamber containing a group of simulated spent fuel assemblies 2. The simulated spent fuel grid 16 may consist of integral panels or single division plates welded together. In the illustrated embodiment, the simulated spent fuel grid 16 includes totally storage chambers, each containing a group of simulated spent fuel assemblies 2.

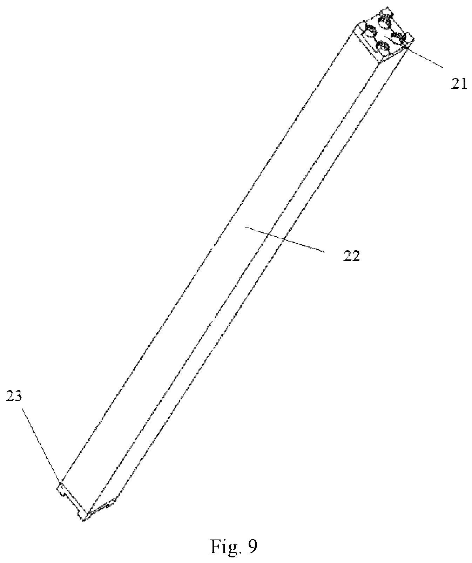

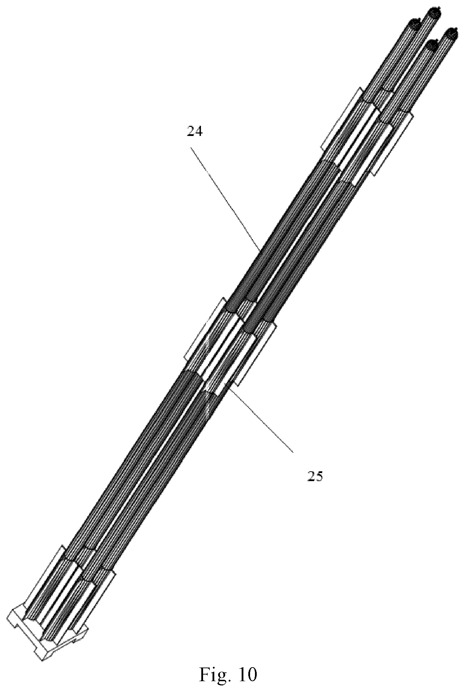

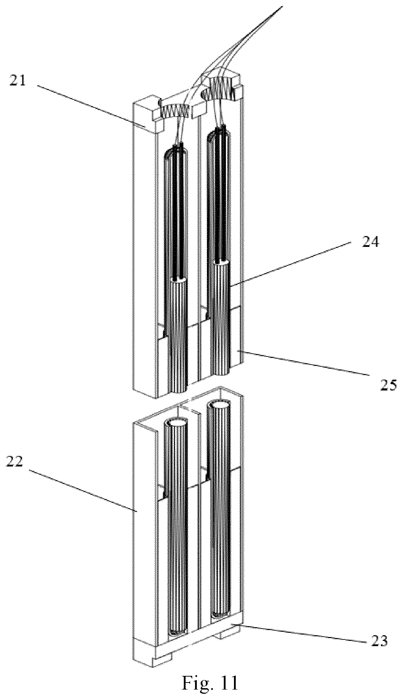

Referring to Figs. 9 to 11, the simulated spent fuel assembly 2 includes an upper tube seat 21, a lower tube seat 23, and a square tube 22 between the upper tube seat 21 and the lower tube seat 23, the upper tube seat 21, the square tube 22 and the lower tube seat 23 are fixedly connected by welding, and are generally rectangular bodies with square cross sections. The square tube 22 is provided with a cross bracket 25 and divided into four storage units, each of which stores an electric heating rod 24. To facilitate fixing, a cross bracket 25 is nested at the outside of each electric heating rod 24 from the top, middle and bottom positions. The electric heating rod 24 preferably is made from stainless steel, with a cylindrical middle section and two spherical crowns at two ends.

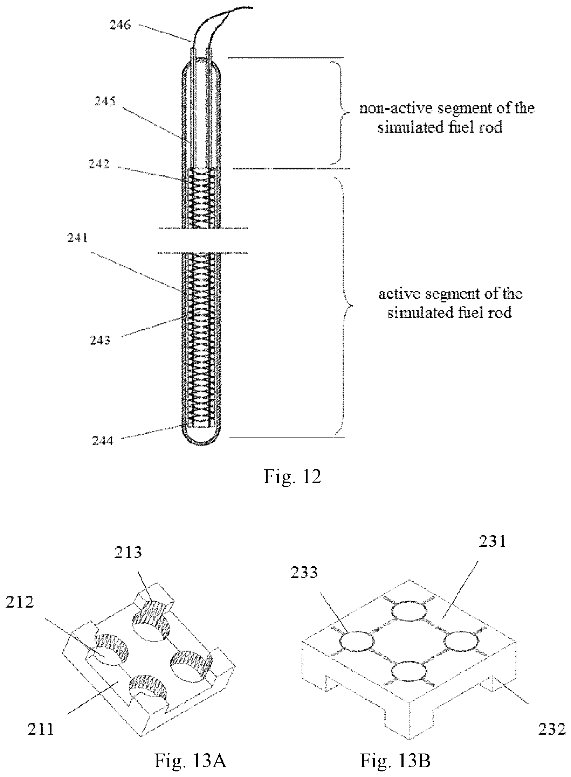

Referring to Fig. 12, the electric heating rod 24 includes a housing 241, a heating wire fixing rod 244 seated in the housing 241, and an electric heating wire 242 arranged around the heating wire fixing rod 244, wherein a filling insulation material 243(such as magnesium oxide) is arranged between the housing 241 and the electric heating wire 242, and the cable 246 connecting the electric heating wire 242 is provided with a protective sleeve 245. In the illustrated embodiment, the electric heating wire 242 is a U-shaped loop coiled around the vertical heating wire fixing rod 244 and located inside the housing 241 of the electric heating rod 24.

In order to improve the accuracy of thermal performance verification of the spent fuel storage tanks, in actual operation process, the spent fuel rods in nuclear power station are equipped with a compression spring at the upper end thereof and no fuel pellets release heat. Therefore, the upper part of the inner cavity of the electric heating rod 24 of the present invention has a hollow structure, which is used for simulating the non-active heating segment of the spent fuel rod. The size of the non-active segment can be verified according to different types of spent fuel assembly. For example, the size of the non-active segment can be about 170cm and the size of the active segment can be about 3662cm. According to the decay heat characteristics of spent fuel assembly, the power range of each group of electric heating rods 24 is from 0.6kw to 2kw.

Referring to Figs. 13A and 13B, the upper tube seat 21 is a square metal member located on the top of the square tube 22. The upper tube seat 21 is provided with a base seat 211, a cable wire hole 212 corresponding to the cable, and a protective platform 213 arranged on the outer edge of the base seat 211. There are four cable wire holes 212, corresponding to the electric heating rods 24, for pulling out the cables 246 from the top of the simulated spent fuel assembly 2 and connecting with the cable penetrator on the top cover. The lower tube seat 23 is a square metal member positioned at the bottom of the square tube 22. The lower tube seat 23 includes a base seat 231, a support leg 232 for supporting the base seat 231, and a holding slot 233 for sleeving the cross bracket 25.

The simulated spent fuel storage tank for a nuclear power station of the present invention can be used for thermal performance identification test, and the test method includes the steps of:
placing an electric heating rod 24 in the simulated spent fuel assembly 2, and encapsulating the upper tube seat 21 and the square tube 22;
installing the simulated spent fuel assembly 2 in storage units of simulated spent fuel grid 16;
collecting and leading out all of the cables of the simulated spent fuel assemblies 2 from the cable penetrator of the inner top cover 12, each eight simulated spent fuel assemblies 2 being set as one group;
sealing the inner top cover 12 and the cylinder body 13 by welding;
welding the cable penetrator of the inner top cover 12;
filling helium gas into the simulated storage tank through an inflatable block 15 to discharge the air in the tank from the bottom of the drainage pipe;
sealing and welding the siphon block 14, the inflatable block 15 and the outer top cover 11;
connecting all the cables of the simulated spent fuel assemblies 2 in advance and pulling out the cables from the penetrator of the outer top cover 11;
connecting and sealing the outer top cover 11 and the cylinder body 13;
connecting the collected cables to the electric heater 3;
simulating the spent fuel assemblies with different heat release rate by adjusting the power of each group of electric heating rods in accordance with the spent fuel management strategy of the nuclear power station;
setting temperature monitoring points on the outside of the spent fuel storage tank according to requirement, comparing the results with the results of thermal numerical simulation analysis, so as to verify the consistency and reliability of the calculated results.

The simulated spent fuel storage tank for a nuclear power station of the present invention can also be simultaneously used for technological tests and skills training such as vacuum drying, automatic welding, cutting and retrieval in the hot environment:
placing the electric heating rod 24 inside the simulated spent fuel assembly 2, encapsulating the upper tube seat 21 and the square tube 22;
installing the simulated spent fuel assembly 2 inside the storage units of the simulated spent fuel grid 16;
collecting and leading out all of the cables of the simulated spent fuel assemblies 2 from the cable penetrator of the inner top cover 12, each eight simulated spent fuel assemblies 2 being set as one group;
connecting all cables collected to the electric heater 3;
simulating the spent fuel assemblies with corresponding heat release rate by adjusting the power of each group of electric heating rods in accordance with the spent fuel management strategy of the nuclear power station; and
filling water into the simulated storage tank by the siphon block 14.

The welding machine is arranged on the top of the inner top cover 12, and the inner top cover 12 and the cylinder 13 are sealed by welding to simulate the automatic welding operation under the hot state environment. Filling helium gas into the simulated tank through the exhaust block 15 to drain water away from the siphon block 14 to simulate the operation of charging and draining; The siphon block 14 and the exhaust block 15 are connected with the vacuum drying system to simulate the vacuum drying operation under the hot state environment; then the cutting machine is arranged on the top of the inner cover 12, and the welding seam of the inner cover 12 is cut, simulation of hot environment in the cutting operation.

The simulated spent fuel storage tank for a nuclear power station can be used for the transfer and storage test.

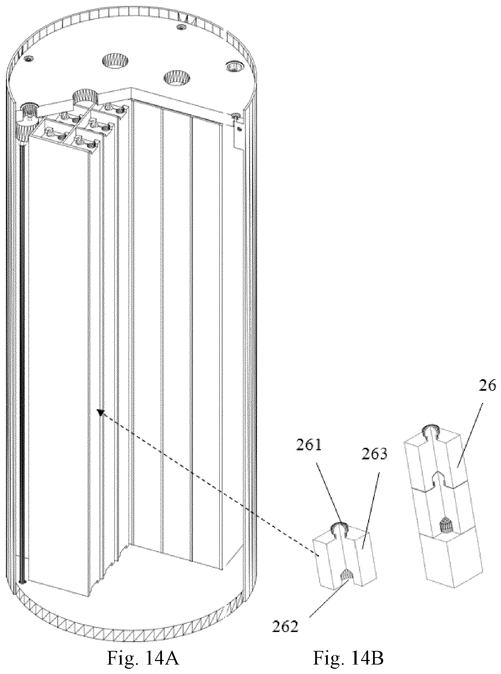

Figs. 14A and 14B show the cross sectional views of the simulated storage tank for the operation test, which can simulate the real load of the spent fuel assembly and be used for the transfer and storage test and skill training of the spent fuel tank.

The simulated storage tank includes an inner top cover 12, a cylinder body 13, a siphon block 14, an inflatable block 15, a simulated spent fuel grid 16 and a bottom plate 17. The inner top cover 12 is fixed to the cylinder body 13 only by a support screw bolt, and no welding is required. There is no cable penetrator on the inner top cover 12.

The simulated spent fuel assembly 2 includes an upper tube seat 21, a square tube 22, lower tube seat 23, an electric heating rod 24, a cross bracket 25, and an assembly test block 26. The assembly test block 26 is a metal cylinder with square cross section, which is located in four storage chambers of the cross bracket 25. The weight of different types of spent fuel assemblies is simulated by layer by layer stacking, in order to complete the spent fuel tank hoisting, transfer and storage process operation. The assembly test block 26 is provided with a lifting handle 261, a bottom hole 262 and a main body 263. The lifting handle 261 is used for stacking operation, and the bottom hole 262 is used for stacking and nesting the lifting handle 261 step by step.

When used for spent fuel assembly transfer storage load test, there is no need to weld the top cover and the cable penetrator. The test method includes:
First, a modular test block is used to place the cross brackets 25 in the four storage units in a step-by-step stacking manner;
Second, a screw at the top of the support of the inner cover of the cylinder 13 is passed through the through hole;
Finally, a bolt is used on the upper part of the inner top cover 12 to secure the inner top cover 12 in the cylinder body 13, to ensure that the simulated spent fuel assembly 2 does not slip out in horizontal operation.

Compared with the prior art, the simulated spent fuel storage tank for a nuclear power station of the present invention can be used for thermal property identification and operation training test. The arrangement state and the thermal power of spent fuel assembly can be precisely simulated according to the actual loading and storage quantity and the heat release quantity of the spent fuel assemblies, and the thermal property identification of a spent fuel storage tank is achieved. The simulated spent fuel storage tank for a nuclear power station of the present invention can also be used to simulate vacuum drying, automatic welding, and cutting and retrieval operations in a real heating environment, to simulate a real spent fuel assembly load in order to perform storage tank transfer and storage operations, such that the skill level of operators can be improved, thereby preventing the occurrence of incidents caused by human factors.

The above described embodiments are only preferred embodiments of the present invention, and are not intended to limit the scope of the present invention. Any modification, equivalent replacement and improvement within the principle of the present invention should be included in the protection scope of the present invention, which is defined by the claims.

## Claims

1. A simulated spent fuel storage tank for nuclear power station, used for accurately simulating layout state and thermal power of spent fuel assemblies and for thermal identification and operation training tests, the simulated spent fuel storage tank for nuclear power station comprising a simulated storage tank (1), simulated spent fuel assemblies (2) received in the simulated storage tank (1), and an electric heater (3), wherein the simulated spent fuel assemblies (2) are electrically connected to the electric heater (3) by cables and wherein the simulated storage tank (1) comprises a bottom plate (17), a cylinder body (13) arranged on the bottom plate (17), a simulated spent fuel grid (16) in the cylinder body (13), an inner top cover (12) and an outer top cover (11) independent from each other seated on a top of the cylinder body (13), wherein the inner top cover (12) is provided with two bolting grooves, and a siphon block (14) and a inflatable block (15) at two sides of the cylinder body (13) are inserted in the two bolting grooves respectively, the siphon block (14) and the inflatable block (15) are provided with quick connectors inside for simulating the operation of filling and draining the spent fuel storage tank with gas, pumping and vacuum drying and filling with helium gas.

2. The simulated spent fuel storage tank for nuclear power station according to claim 1, **characterized in that** the bolting groove is provided with a layer of independent cover plate, and the cover plate is welded to the inner top cover (12).

3. The simulated spent fuel storage tank for nuclear power station according to claim 1, **characterized in that** an inner top cover support (132) for supporting the inner top cover (12) is provided on a top of the inner sidewall (131) of the cylinder body (13), and a support screw (133) is arranged on a top of the inner top cover support (132), and the support screw (133) penetrates an additional bolting groove (126) defined in the inner top cover (12) to fix the inner top cover (12) via a bolt.

4. The simulated spent fuel storage tank for nuclear power station according to claim 3, **characterized in that** the inner top cover (12) is provided with a further bolting groove (126), a clamp groove (128) located above the further bolting groove (126), and a bolting groove cover plate (127), the further bolting groove (126) is provided with a through hole, and the support screw (133) on the top of the inner top cover support (132) passes through the through hole and couples the inner top cover (12) to the cylinder body (13) via bolt thread connection, with the clamp groove (128) sleeving on the inner top cover support (132) for fixing the inner top cover support (132).

5. The simulated spent fuel storage tank for nuclear power station according to claim 1, **characterized in that** the outer top cover (11) is formed with a first body (111), a first cable hole (113) extending through the first body (111), and a first cable penetrator (114) disposed in the first cable hole (113), wherein the first cable penetrator (114) seals the first cable hole (113) via welding or thread connection.

6. The simulated spent fuel storage tank for nuclear power station according to claim 5, **characterized in that** the first cable penetrator (114) is a two-step cylinder with a cable penetrating passage in a middle thereof, for connecting a cable running through the inner top cover (12) to the electric heater (3) through the outer top cover (11).

7. The simulated spent fuel storage tank for nuclear power station according to claim 5, **characterized in that** the inner top cover (12) comprises a second body (121), a siphon block through hole and an inflatable block through hole defined in the second body (121), and a second cable hole (124) and a second cable penetrator (125) corresponding to the first cable hole (113) and the first cable penetrator (114), and the second cable hole (124) is provided with a cover plate.

8. The simulated spent fuel storage tank for nuclear power station according to claim 1, **characterized in that** the siphon block (14) comprises a siphon connection block (141), a drain pipe (143), and a quick connector (142) for connecting the siphon connection block (141) and the drain pipe (143).

9. The simulated spent fuel storage tank for nuclear power station according to claim 1, **characterized in that** the simulated spent fuel grid (16) comprises a plurality of storage chambers, with each storage chamber containing a set of simulated spent fuel assemblies (2), the simulated spent fuel assembly (2) comprises an upper tube seat (21), a lower tube seat (23), and a square tube (22) between the upper tube seat (21) and the lower tube seat (23), the square tube (22) is provided with a cross bracket (25) to divide the square tube (22) into four storage units, and each storage unit stores an electric heating rod (24).

10. The simulated spent fuel storage tank for nuclear power station according to claim 9, **characterized in that** the electric heating rod (24) comprises a housing (241), a heating wire fixing rod (244) seated in the housing (241), and an electric heating wire (242) set around the heating wire fixing rod (244), wherein a filling insulation material (243) is arranged between the housing (241) and the electric heating wire (242), and the cable (246) connecting the electric heating wire (242) is formed with a protective sleeve (245).

11. The simulated spent fuel storage tank for nuclear power station according to claim 9, **characterized in that** the upper tube seat (21) is provided with a base seat (211), a cable wire hole (212) corresponding to the cable (246), and a protective platform (213) arranged on an outer edge of the base seat (211).

12. The simulated spent fuel storage tank for nuclear power station according to claim 9, **characterized in that** the lower tube seat (23) comprises a base seat (231), a support leg (232) for supporting the base seat (231), and a holding slot (233) for sleeving and fixing the cross bracket (25).

## Patentansprüche

1. Simulierter Tank zur Lagerung von verbrauchtem Brennstoff für ein Kernkraftwerk, der zum genauen Simulieren des Layoutzustands und der Wärmeleistung von Baugruppen für verbrauchten Brennstoff und für thermische Identifizierungs- und Betriebstrainingstests verwendet wird, wobei der simulierte Tank zur Lagerung von verbrauchtem Brennstoff für ein Kernkraftwerk Folgendes umfasst:
einen simulierten Tank (1) zur Lagerung, wobei simulierte Baugruppen (2) für verbrauchten Brennstoff in dem simulierten Tank (1) zur Lagerung aufgenommen sind, und eine elektrische Heizung (3), wobei die simulierten Baugruppen (2) für verbrauchten Brennstoff mit der elektrischen Heizung (3) durch Kabel elektrisch verbunden sind und wobei der simulierte Tank (1) zur Lagerung eine Bodenplatte (17), einen Zylinderkörper (13), der auf der Bodenplatte (17) angeordnet ist, ein simuliertes Gitter (16) für verbrauchten Brennstoff in dem Zylinderkörper (13), eine innere obere Abdeckung (12) und eine äußere obere Abdeckung (11), die unabhängig voneinander auf einer Oberseite des Zylinderkörpers (13) sitzen, umfasst, wobei die innere obere Abdeckung (12) mit zwei Verbolzungsnuten bereitgestellt ist und ein Siphonblock (14) und ein aufblasbarer Block (15) an zwei Seiten des Zylinderkörpers (13) jeweils in die zwei Verbolzungsnuten eingesetzt sind, wobei der Siphonblock (14) und der aufblasbare Block (15) mit Schnellverbindern im Inneren bereitgestellt sind, um den Vorgang des Füllens und Entleerens des Tanks zur Lagerung von verbrauchtem Brennstoff mit Gas, Pumpen und Vakuumtrocknen und Füllen mit Heliumgas zu simulieren.

2. Simulierter Tank zur Lagerung von verbrauchtem Brennstoff für ein Kernkraftwerk nach Anspruch 1, **dadurch gekennzeichnet, dass** die Verbolzungsnut mit einer Schicht einer unabhängigen Abdeckplatte bereitgestellt ist und die Abdeckplatte mit der inneren oberen Abdeckung (12) verschweißt ist.

3. Simulierter Tank zur Lagerung von verbrauchtem Brennstoff für ein Kernkraftwerk nach Anspruch 1, **dadurch gekennzeichnet, dass** eine Stütze (132) der inneren oberen Abdeckung zum Stützen der inneren oberen Abdeckung (12) an einer Oberseite der inneren Seitenwand (131) des Zylinderkörpers (13) bereitgestellt ist und eine Stützschraube (133) an einer Oberseite der Stütze (132) der inneren oberen Abdeckung angeordnet ist und die Stützschraube (133) eine zusätzliche Verbolzungsnut (126) durchdringt, die in der inneren oberen Abdeckung (12) definiert ist, um die innere obere Abdeckung (12) über einen Bolzen zu befestigen.

4. Simulierter Tank zur Lagerung von verbrauchtem Brennstoff für ein Kernkraftwerk nach Anspruch 3, **dadurch gekennzeichnet, dass** die innere obere Abdeckung (12) mit einer weiteren Verbolzungsnut (126), einer Klemmnut (128), die sich über der weiteren Verbolzungsnut (126) befindet, und einer Verbolzungsnutabdeckplatte (127) bereitgestellt ist, die weitere Verbolzungsnut (126) mit einem Durchgangsloch bereitgestellt ist und die Stützschraube (133) an der Oberseite der Stütze (132) der inneren oberen Abdeckung durch das Durchgangsloch verläuft und die innere obere Abdeckung (12) an den Zylinderkörper (13) über Bolzengewindeverbindung koppelt, wobei die Klemmnut (128) auf der Stütze (132) der inneren oberen Abdeckung zum Befestigen der Stütze (132) der inneren oberen Abdeckung aufliegt.

5. Simulierter Tank zur Lagerung von verbrauchtem Brennstoff für ein Kernkraftwerk nach Anspruch 1, **dadurch gekennzeichnet, dass** die äußere obere Abdeckung (11) mit einem ersten Körper (111), einem ersten Kabelloch (113), das sich durch den ersten Körper (111) erstreckt, und einem ersten Kabelpenetrator (114), der in dem ersten Kabelloch (113) vorgesehen ist, gebildet ist, wobei der erste Kabelpenetrator (114) das erste Kabelloch (113) über Schweißen oder Gewindeverbindung abdichtet.

6. Simulierter Tank zur Lagerung von verbrauchtem Brennstoff für ein Kernkraftwerk nach Anspruch 5, **dadurch gekennzeichnet, dass** der erste Kabelpenetrator (114) ein zweistufiger Zylinder mit einem kabelpenetrierenden Durchlass in einer Mitte davon ist, um ein Kabel, das durch die innere obere Abdeckung (12) verläuft, mit der elektrischen Heizung (3) durch die äußere obere Abdeckung (11) zu verbinden.

7. Simulierter Tank zur Lagerung von verbrauchtem Brennstoff für ein Kernkraftwerk nach Anspruch 5, **dadurch gekennzeichnet, dass** die innere obere Abdeckung (12) einen zweiten Körper (121), ein Siphonblockdurchgangsloch und ein aufblasbares Blockdurchgangsloch, das in dem zweiten Körper (121) definiert ist, und ein zweites Kabelloch (124) und einen zweiten Kabelpenetrator (125) entsprechend dem ersten Kabelloch (113) und dem ersten Kabelpenetrator (114) umfasst, und das zweite Kabelloch (124) mit einer Abdeckplatte bereitgestellt ist.

8. Simulierter Tank zur Lagerung von verbrauchtem Brennstoff für ein Kernkraftwerk nach Anspruch 1, **dadurch gekennzeichnet, dass** der Siphonblock (14) einen Siphonverbindungsblock (141), ein Ablaufrohr (143) und einen Schnellverbinder (142) zum Verbinden des Siphonverbindungsblocks (141) und des Ablaufrohres (143) umfasst.

9. Simulierter Tank zur Lagerung von verbrauchtem Brennstoff für ein Kernkraftwerk nach Anspruch 1, **dadurch gekennzeichnet, dass** das simulierte Gitter (16) für verbrauchten Brennstoff eine Vielzahl von Speicherkammern umfasst, wobei jede Speicherkammer einen Satz von simulierten Baugruppen (2) für verbrauchten Brennstoff enthält, die simulierte Baugruppe (2) für verbrauchten Brennstoff einen oberen Rohrsitz (21), einen unteren Rohrsitz (23) und ein Vierkantrohr (22) zwischen dem oberen Rohrsitz (21) und dem unteren Rohrsitz (23) umfasst, das Vierkantrohr (22) mit einer Querhalterung (25) bereitgestellt ist, um das Vierkantrohr (22) in vier Speichereinheiten zu unterteilen, und jede Speichereinheit einen elektrischen Heizstab (24) speichert.

10. Simulierter Tank zur Lagerung von verbrauchtem Brennstoff für ein Kernkraftwerk nach Anspruch 9, **dadurch gekennzeichnet, dass** der elektrische Heizstab (24) ein Gehäuse (241), einen Heizdrahtbefestigungsstab (244), der in dem Gehäuse (241) sitzt, und einen elektrischen Heizdraht (242) umfasst, der um den Heizdrahtbefestigungsstab (244) gesetzt ist, wobei ein Füllisolationsmaterial (243) zwischen dem Gehäuse (241) und dem elektrischen Heizdraht (242) angeordnet ist und das Kabel (246), das den elektrischen Heizdraht (242) verbindet, mit einer Schutzhülse (245) gebildet ist.

11. Simulierter Tank zur Lagerung von verbrauchtem Brennstoff für ein Kernkraftwerk nach Anspruch 9, **dadurch gekennzeichnet, dass** der obere Rohrsitz (21) mit einem Basissitz (211), einem Kabeldrahtloch (212) entsprechend dem Kabel (246) und einer Schutzplattform (213), die an einer Außenkante des Basissitzes (211) angeordnet ist, bereitgestellt ist.

12. Simulierter Tank zur Lagerung von verbrauchtem Brennstoff für ein Kernkraftwerk nach Anspruch 9, **dadurch gekennzeichnet, dass** der untere Rohrsitz (23) einen Basissitz (231), ein Stützbein (232) zum Stützen des Basissitzes (231) und einen Halteschlitz (233) zum Hülsen und Befestigen der Querhalterung (25) umfasst.

## Revendications

1. Réservoir de stockage de combustible épuisé simulé pour centrale nucléaire, utilisé pour simuler avec précision l'état de configuration et la puissance thermique d'assemblages de combustible épuisé et pour des essais d'identification thermique et de formation à l'exploitation, le réservoir de stockage de combustible épuisé simulé pour centrale nucléaire comprenant
un réservoir de stockage simulé (1), des assemblages de combustible épuisé simulé (2) reçus dans le réservoir de stockage simulé (1) et un dispositif de chauffage électrique (3), dans lequel les assemblages de combustible épuisé simulé (2) sont connectés électriquement au dispositif de chauffage électrique (3) par des câbles et dans lequel le réservoir de stockage simulé (1) comprend une plaque de fond (17), un corps de cylindre (13) agencé sur la plaque de fond (17), une grille de combustible épuisé simulé (16) dans le corps de cylindre (13), un couvercle supérieur interne (12) et un couvercle supérieur externe (11) indépendants l'un de l'autre situés sur un sommet du corps de cylindre (13), dans lequel le couvercle supérieur interne (12) est muni de deux rainures de boulonnage, et un bloc de siphon (14) et un bloc de gonflage (15) des deux côtés du corps de cylindre (13) sont insérés dans les deux rainures de boulonnage respectivement, le bloc de siphon (14) et le bloc de gonflage (15) sont munis de raccords rapides à l'intérieur pour simuler l'opération de remplissage et de vidange du réservoir de stockage de combustible épuisé avec du gaz, de pompage et de séchage sous vide et de remplissage avec de l'hélium gazeux.

2. Réservoir de stockage de combustible épuisé simulé pour centrale nucléaire selon la revendication 1, **caractérisé en ce que** la rainure de boulonnage est pourvue d'une couche de plaque de recouvrement indépendante, et la plaque de recouvrement est soudée au couvercle supérieur interne (12).

3. Réservoir de stockage de combustible épuisé simulé pour centrale nucléaire selon la revendication 1, **caractérisé en ce qu'**un support de couvercle supérieur interne (132) pour supporter le couvercle supérieur interne (12) est prévu sur un sommet de la paroi latérale interne (131) du corps de cylindre (13), et une vis de support (133) est agencée sur un sommet du support de couvercle supérieur interne (132), et la vis de support (133) pénètre dans une rainure de boulonnage supplémentaire (126) définie dans le couvercle supérieur interne (12) pour fixer le couvercle supérieur interne (12) via un boulon.

4. Réservoir de stockage de combustible épuisé simulé pour centrale nucléaire selon la revendication 3,
**caractérisé en ce que** le couvercle supérieur interne (12) est muni d'une autre rainure de boulonnage (126), d'une rainure de serrage (128) située au-dessus de l'autre rainure de boulonnage (126), et d'une plaque de recouvrement de rainure de boulonnage (127), l'autre rainure de boulonnage (126) est munie d'un trou traversant, et la vis de support (133) sur le sommet du support de couvercle supérieur interne (132) passe à travers le trou traversant et couple le couvercle supérieur interne (12) au corps de cylindre (13) via une connexion par filetage de boulon, avec la rainure de serrage (128) emmanchant le support de couvercle supérieur interne (132) pour fixer le support de couvercle supérieur interne (132).

5. Réservoir de stockage de combustible épuisé simulé pour centrale nucléaire selon la revendication 1, **caractérisé en ce que** le couvercle supérieur externe (11) est formé avec un premier corps (111), un premier trou de câble (113) s'étendant à travers le premier corps (111), et un premier pénétrateur de câble (114) disposé dans le premier trou de câble (113), dans lequel le premier pénétrateur de câble (114) scelle le premier trou de câble (113) via une soudure ou une connexion filetée.

6. Réservoir de stockage de combustible épuisé simulé pour centrale nucléaire selon la revendication 5, **caractérisé en ce que** le premier pénétrateur de câble (114) est un cylindre à deux étages avec un passage de pénétration de câble au milieu de celui-ci, pour connecter un câble traversant le couvercle supérieur interne (12) au dispositif de chauffage électrique (3) à travers le couvercle supérieur externe (11).

7. Réservoir de stockage de combustible épuisé simulé pour centrale nucléaire selon la revendication 5, **caractérisé en ce que** le couvercle supérieur interne (12) comprend un second corps (121), un trou traversant de bloc de siphon et un trou traversant de bloc de gonflage définis dans le second corps (121), et un second trou de câble (124) et un second pénétrateur de câble (125) correspondant au premier trou de câble (113) et au premier pénétrateur de câble (114), et le second trou de câble (124) est pourvu d'une plaque de recouvrement.

8. Réservoir de stockage de combustible épuisé simulé pour centrale nucléaire selon la revendication 1, **caractérisé en ce que** le bloc de siphon (14) comprend un bloc de raccordement de siphon (141), un tuyau de drainage (143), et un raccord rapide (142) pour raccorder le bloc de raccordement de siphon (141) et le tuyau de drainage (143).

9. Réservoir de stockage de combustible épuisé simulé pour centrale nucléaire selon la revendication 1, **caractérisé en ce que** la grille de combustible épuisé simulé (16) comprend une pluralité de chambres de stockage, avec chaque chambre de stockage contenant un ensemble d'assemblages de combustible épuisé simulé (2), l'assemblage de combustible épuisé simulé (2) comprend un siège de tube supérieur (21), un siège de tube inférieur (23), et un tube carré (22) entre le siège de tube supérieur (21) et le siège de tube inférieur (23), le tube carré (22) est pourvu d'un croisillon (25) pour diviser le tube carré (22) en quatre unités de stockage, et chaque unité de stockage stocke une tige de chauffage électrique (24).

10. Réservoir de stockage de combustible épuisé simulé pour centrale nucléaire selon la revendication 9, **caractérisé en ce que** la tige de chauffage électrique (24) comprend un boîtier (241), une tige de fixation de fil chauffant (244) logée dans le boîtier (241), et un fil chauffant électrique (242) placé autour de la tige de fixation de fil chauffant (244), dans lequel un matériau isolant de remplissage (243) est agencé entre le boîtier (241) et le fil chauffant électrique (242), et le câble (246) connectant le fil chauffant électrique (242) est formé avec un manchon de protection (245).

11. Réservoir de stockage de combustible épuisé simulé pour centrale nucléaire selon la revendication 9, **caractérisé en ce que** le siège de tube supérieur (21) est pourvu d'un siège de base (211), d'un trou de fil de câble (212) correspondant au câble (246), et d'une plate-forme de protection (213) agencée sur un bord externe du siège de base (211).

12. Réservoir de stockage de combustible épuisé simulé pour centrale nucléaire selon la revendication 9, **caractérisé en ce que** le siège de tube inférieur (23) comprend un siège de base (231), un pied de support (232) pour supporter le siège de base (231), et une fente de maintien (233) pour emmancher et fixer le croisillon (25).
